# EUROPÄISCHE PATENTSCHRIFT

(11) **EP 3 529 790 B1**
(45) Veröffentlichungstag und Bekanntmachung des Hinweises auf die Patenterteilung: **09.08.2023**
(21) Anmeldenummer: 17791322.5
(22) Anmeldetag: 18.10.2017
(51) Int. Cl.: G08B 25/04

(54) **VERFAHREN ZUR INBETRIEBNAHME UND/ODER WARTUNG EINER BRANDMELDER- UND/ODER LÖSCHSTEUERZENTRALE SOWIE VORRICHTUNG DAFÜR**
METHOD FOR THE IMPLEMENTATION AND/OR MAINTENANCE OF A CENTRAL FIRE ALARM SYSTEM AND/OR FIRE EXTINGUISHING CONTROL CENTER AND DEVICE THEREFORE
PROCÉDÉ DE MISE EN SERVICE ET/OU DE MAINTENANCE D'UNE CENTRALE D'ALARME INCENDIE ET/OU DE COMMANDE D'EXTINCTION D'INCENDIE AINSI QUE DISPOSITIF ASSOCIÉ

(30) Priorität: 21.10.2016 DE 102016120081
(43) Veröffentlichungstag der Anmeldung: 28.08.2019
(73) Patentinhaber: Minimax GmbH, 23843 Bad Oldesloe (DE)
(72) Erfinder: MANDELKAU, Detlef, 23611 Bad Schwartau (DE)
(74) Vertreter: Eisenführ Speiser
(86) Internationale Anmeldenummer: PCT/EP2017/076559
(87) Internationale Veröffentlichungsnummer: WO 2018/073284

(56) Entgegenhaltungen:
- EP-A1- 2 975 586
- EP-A2- 1 296 301
- DE-U1- 29 817 784
- JP-A- H09 190 588
- US-A1- 2002 180 598
- US-A1- 2012 068 842
- US-A1- 2012 120 070
- US-A1- 2014 009 279

## Beschreibung

Die Erfindung betrifft ein Verfahren sowie ein korrespondierendes System zur Inbetriebnahme und/oder Wartung einer Brandmelder- und/oder Löschsteuerzentrale mittels einer Anzeige- und Bedieneinheit.

Gemäß dem Stand der Technik weisen Brandmeldesysteme Teilnehmer, wie z. B. Brandmelder, auf, die mit einer Brandmelderzentrale des Brandmeldesystems verbunden sind. Nach Ansprechen oder Auslösen eines Teilnehmers aufgrund eines Ereignisses, wie z. B. eines detektierten Brandes, werden die Ereignismeldungen demnach von dem entsprechenden Teilnehmer an die Brandmelderzentrale mittels der elektrischen Leitungen übertragen.

Außerdem weist die Brandmelderzentrale, die üblicherweise modular aufgebaut ist, eine Vielzahl von Modulen, die auch Funktionsmodule genannt werden, auf. Diese Funktionsmodule weisen Anschlüsse auf, mit denen die elektrischen Leitungen der Teilnehmer verbunden werden. Hierbei gilt, dass nicht jeder Teilnehmer mit einem beliebigen Funktionsmodul verbunden werden kann, sondern dass abhängig vom Einbauort des Teilnehmers sowie der Funktion oder Art des Teilnehmers ein bestimmter oder einer von mehreren bestimmten Anschlüssen eines vorbestimmten Funktionsmoduls für den Anschluss gewählt werden muss.

Wird von einem Teilnehmer ein Ereignis detektiert und dieses über die elektrische Leitung sowie das Funktionsmodul an die Brandmelder- und/oder Löschsteuerzentrale übermittelt, so werden in Reaktion auf dieses Ereignis Teilnehmer, wie Aktoren einer Löscheinrichtung, ansteuert. Diese Aktoren sind z. B. Ventile, um Löschfluidleitungen zu öffnen. Auch diese Teilnehmer, wie Aktoren, sind über elektrische Leitungen mit Funktionsmodulen der Löschsteuerzentrale verbunden.

Bei großen Gebäuden oder Industrieanlagen ist die Anzahl der Teilnehmer sehr hoch und kann z. B. eine Anzahl von mehreren hundert Teilnehmern übersteigen. Auch die Anzahl der Funktionsmodule bewegt sich bei derartigen Objekten in einem Bereich von beispielsweise bis zu 100 Funktionsmodulen.

In dem zu schützenden Objekt werden die Teilnehmer bereits in ihrer gemäß der Planung vorbestimmten Position angeordnet und die elektrischen Leitungen zu einem Ort verlegt, an dem die Brandmelder- und/oder Löschsteuerzentrale angeordnet wird.

Zur Inbetriebnahme der Brandmelder- und/oder Löschsteuerzentrale ist es dann Aufgabe, alle ankommenden elektrischen Leitungen der Teilnehmer, die z. B. Signalleitungen und/oder Energieübertragungsleitungen sind, mit den entsprechenden Funktionsmodulen der Brandmelder- und/oder Löschsteuerzentrale zu verbinden. Hierbei muss darauf geachtet werden, dass jede der elektrischen Leitungen exakt an dem Anschluss eines Funktionsmoduls angeschlossen wird, an dem der Projektplaner dies vorgesehen hat.

Das Ausführen der Verbindung der elektrischen Leitungen der Teilnehmer mit den entsprechenden Anschlüssen der Funktionsmodule ist daher sehr fehleranfällig und muss mit allergrößter Sorgfalt, beispielsweise mittels Schaltplänen, ausgeführt werden. Trotz Sorgfalt treten häufig noch Fehler auf, die im Nachhinein bei einer Funktionskontrolle aufgefunden werden und behoben werden müssen. Die Installation und/oder Inbetriebnahme einer Brandmelder- und/oder Löschsteuerzentrale ist somit sehr zeitaufwändig und fehleranfällig. Außerdem gibt es keine Garantie, dass die Planungsunterlagen mit der tatsächlichen Konfiguration in der Brandmelder- und/oder Löschsteuerzentrale übereinstimmen.

Das Dokument US 2014/009279 beschreibt ein System, bei dem der Touchscreen der Brandmeldezentrale eines Alarmsystems die interaktive Anzeige des Status der Melder und Aktoren des Systems ermöglicht.

Aufgabe der vorliegenden Erfindung ist es daher, ein Verfahren und ein System zu finden, um eine Inbetriebnahme und Wartung einer Brandmelder- und/oder Löschsteuerzentrale im Hinblick auf die zuvor genannten Probleme zu adressieren. Insbesondere soll eine Möglichkeit zur Vereinfachung der Inbetriebnahme und Wartung und zur Reduzierung von Fehlern bei der Inbetriebnahme von Brandmelder- und/oder Löschsteuerzentralen vorgeschlagen werden. Zumindest soll eine alternative Lösung zum Stand der Technik vorgeschlagen werden.

Gemäß einem Aspekt wird ein Verfahren zur Inbetriebnahme und/oder Wartung einer Brandmelder- und/oder Löschsteuerzentrale mittels einer Anzeige- und Bedieneinheit gemäß Anspruch 1 bereitgestellt.

Gemäß dem erfindungsgemäßen Verfahren wird somit, basierend auf der Interaktionseinheit zur Interaktion mit einem Bediener, eine inhaltliche Verbindung der Anzeige- und Bedieneinheit mit dem Funktionsmodul, zu dem die Interaktionseinheit gehört, ermöglicht. Nachdem die Anzeige der Funktionsmoduldaten, die zu einem Funktionsmodul gehören, somit zu einer Interaktion der Interaktionseinheit mit dem Bediener führt oder von einer Interaktion des Bedieners mit der Interaktionseinheit abhängt, wird die Zuordnung von angezeigten Funktionsmoduldaten zu dem tatsächlichen Funktionsmodul erleichtert. Dem Bediener wird die Inbetriebnahme beziehungsweise Wartung der Brandmelder- und/oder Löschsteuerzentrale somit erleichtert, da zusätzlich zu einer Anzeige der zu einem Funktionsmodulen gehörenden Funktionsmoduldaten auch eine Interaktion mit dem zugehörigen Funktionsmodul erfolgt. Die Anfälligkeit für Fehler beim Anschließen, beispielsweise von Teilnehmern, an den Funktionsmoduldaten kann somit verringert werden. Auch kann eine Inbetriebnahme und/oder Wartung vereinfacht werden, da basierend auf der Interaktion eine Verwechslung des Funktionsmoduls, dessen zugehörige Funktionsmoduldaten angezeigt werden, weniger wahrscheinlich wird.

Eine Interaktion bezeichnet in diesem Fall eine zumindest einseitige Kommunikation, das heißt, insbesondere eine Kommunikation von der Interaktionseinheit zu dem Bediener oder eine Kommunikation von dem Bediener in Richtung der Interaktionseinheit. Mit anderen Worten, eine Interaktionseinheit kann eine Eingabeeinheit, eine Ausgabeeinheit oder eine kombinierte Eingabe- und Ausgabeeinheit umfassen.

Die Anzeige- und Bedieneinheit kann eine in der Brandmelder- und/oder Löschsteuerzentrale integrierte, beispielsweise an dem Gehäuse der Brandmelder- und/oder Löschsteuerzentrale angeordnete, Anzeige- und Bedieneinheit sein. In einer Ausführungsform kann die Anzeige- und Bedieneinheit als taktiler Bildschirm ausgestaltet sein, bei der die Anzeige und Bedienung auf dem gleichen Bereich der Anzeige- und Bedieneinheit erfolgen kann. In einer anderen Ausführungsform kann die Anzeige- und Bedieneinheit auch Bedienelemente aufweisen, die in einem von der Anzeige verschiedenen Bereich angeordnet sind, beispielsweise in Form von Knöpfen, Tastern, Schaltern, et cetera. In einer anderen Ausführungsform kann die Anzeige- und Bedieneinheit auch entfernt von dem Gehäuse der Brandmelder- und/oder Löschsteuerzentrale bereitgestellt und mit der Brandmelder- und/oder Löschsteuerzentrale drahtgebunden und/oder drahtlos verbindbar sein. In dieser Ausführungsform kann die Anzeige- und Bedieneinheit beispielsweise als Notebook, Tablet, Smartphone oder Ähnliches ausgebildet sein. Die erwähnten Ausgestaltungen der Anzeige- und Bedieneinheit sind selbstverständlich nur beispielhaft zu verstehen, wobei auch andere Ausgestaltungen vorteilhaft einsetzbar sind.

In einer Ausführungsform umfasst die Interaktionseinheit ein Betätigungselement, insbesondere einen Schalter oder einen Taster, wobei das Verfahren die folgenden Schritte umfasst:
a) Betätigung des Betätigungselementes eines der Funktionsmodule durch den Bediener,
b) Identifikation des der Betätigung zugehörigen Funktionsmoduls,
c) Bereitstellen von Funktionsmoduldaten des identifizierten Funktionsmoduls und
d) Anzeigen der Funktionsmoduldaten auf der Anzeige- und Bedieneinheit .

In dieser Ausführungsform ermöglicht die Interaktionseinheit somit, dass durch eine Betätigung des Betätigungselementes eines Funktionsmoduls die zu dem Funktionsmodul gehörenden Funktionsmoduldaten in Reaktion auf die Betätigung auf der Anzeige- und Bedieneinheit angezeigt werden. Eine Korrelation zwischen Funktionsmodul und Funktionsmoduldaten, die in der Anzeige- und Bedieneinheit angezeigt werden, ist durch einfaches Betätigen des Betätigungselementes möglich. Obwohl ein Schalter oder ein Taster als Beispiele des Betätigungselementes in dieser Ausführungsform genannt sind, sind in anderen Ausführungsformen auch andere Ausgestaltungen eines Betätigungselementes möglich.

In einer Ausführungsform übermittelt das Funktionsmodul bei Betätigung des Betätigungselementes eine Kennung an die zentrale Steuereinheit, wobei die zentrale Steuereinheit die Funktionsmoduldaten basierend auf der Kennung bereitstellt.

Die Kennung kann beispielsweise vorprogrammiert sein oder während der Inbetriebnahme der Brandmelder- und/oder Löschsteuerzentrale zugewiesen werden. Die Zuweisung erfolgt vorzugsweise automatisch mittels eines geeigneten Algorithmus. Alternativ oder zusätzlich kann die Kennung auch anders ausgelegt sein, beispielsweise fest in dem Funktionsmodul einprogrammierte bzw. verschaltete Codierung enthalten sein.

Die Kennung in den Modulen entsteht vorzugsweise durch die Reihenfolge der Module auf dem Bus. Sie kann beispielsweise in einem Eimerkettenverfahren vergeben und gegen die Konfigurationsdaten verprobt werden. Die Kennung eines Funktionsmoduls ist einzigartig, das heißt, dass jedes Funktionsmodul über eine individuelle und unterscheidbare Kennung verfügt. Basierend auf dieser Kennung kann die zentrale Steuereinheit dann die Funktionsmoduldaten des entsprechenden Funktionsmoduls zuordnen und zur Anzeige auf der Anzeige- und Bedieneinheit bereitstellen.

In einer Ausführungsform übermittelt das Funktionsmodul die Funktionsmoduldaten zumindest teilweise zusätzlich zu der Kennung an die zentrale Steuereinheit und/oder liest die zentrale Steuereinheit die Funktionsmoduldaten basierend auf der Kennung aus einem Speicher aus.

In einem Fall sind die Funktionsmoduldaten somit vorzugsweise teilweise auf einem in dem Funktionsmodul enthaltenen Speicher verfügbar. In diesem Fall können sie dann zusammen mit der Kennung an die zentrale Steuereinheit übermittelt werden, wenn das Betätigungselement betätigt wird. In einer weiteren Ausführungsform können die Funktionsmoduldaten auch nachträglich, das heißt nach dem Übermitteln der Kennung, von der zentralen Steuereinheit angefragt werden und in Antwort auf die Anfrage von dem Funktionsmodul übertragen werden. Alternativ oder zusätzlich liest die zentrale Steuereinheit die Funktionsmoduldaten vorzugsweise aus einem weiteren Speicher aus. Der weitere Speicher befindet sich in einer Ausführungsform innerhalb der Brandmelder- und/oder Löschsteuerzentrale, insbesondere der zentralen Steuereinheit zugeordnet, wobei er sich in anderen Ausführungsformen auch entfernt von der Brandmelder- und/oder Löschsteuerzentrale angeordnet befinden kann, beispielsweise auf einem über eine Datenverbindung, insbesondere einer Internetverbindung, verbundenen Server.

Die Interaktionseinheit weist eine optische Anzeigeeinheit, insbesondere eine Leuchteinheit, auf, wobei das Verfahren ein Ansteuern der optischen Anzeigeeinheit des Funktionsmoduls umfasst, dessen Funktionsmoduldaten auf der Anzeige- und Bedieneinheit angezeigt werden.

Vorzugsweise umfasst ein Ansteuern der Leuchteinheit wenigstens ein Einschalten, ein Betreiben der Leuchteinheit in einem Blinkmodus, ein Einstellen der Farbe der Leuchteinheit in Abhängigkeit der Funktionsmoduldaten oder ein Ansteuern der optischen Anzeigeeinheit mit variabler Leuchtstärke. Auch Kombinationen der verschiedenen Ansteuerarten sind vorteilhaft denkbar.

Die Interaktionseinheit weist somit eine Ausgabeeinheit in Form einer optischen Anzeigeeinheit auf. Die Leuchteinheit kann vorzugsweise als Leuchtdiode oder Ansammlung von Leuchtdioden einer bestimmten Farbe oder mehrerer Farben ausgestaltet sein. Indem das optische Anzeigeelement als Reaktion auf die Anzeige von Funktionsmoduldaten, die einem Funktionsmodul zugeordnet sind, angesteuert wird, wird eine einfache Zuordnung von angezeigten Funktionsmoduldaten zu dem zugehörigen Funktionsmodul ermöglicht.

Vorzugsweise kann die Ausgabe der optischen Anzeigeeinheit in Abhängigkeit der Funktionsmoduldaten verändert werden, beispielsweise kann die optische Anzeigeeinheit bei Vorliegen eines Fehlers rot leuchten, während sie im fehlerfreien Betrieb grün leuchtet. Auch andere Ansteuerungen der Anzeigeeinheit sind in anderen Ausführungsformen möglich.

Die Interaktionseinheit weist eine optische Anzeigeeinheit, insbesondere eine Leuchteinheit, auf, wobei das Verfahren umfasst:
a) Identifizieren eines der Funktionsmodule basierend auf einer Eingabe in die Anzeige- und Bedieneinheit,
b) Bereitstellen von zu dem identifizierten Funktionsmodul gehörenden Funktionsmoduldaten,
c) Anzeigen der Funktionsmoduldaten auf der Anzeige- und Bedieneinheit und
d) Ansteuern der optischen Anzeigeeinheit des identifizierten Funktionsmoduls.

Es sollte beachtet werden, dass die angegebene Reihenfolge der Verfahrensschritte nicht deren zeitliche Abfolge impliziert. Insbesondere können die Schritte b) und d) zeitgleich oder auch zeitlich nacheinander, beginnend mit einem beliebigen der Schritte b) und d), erfolgen. Das Ansteuern der optischen Anzeigeeinheit kann demnach unabhängig von einer vorangehenden Anzeige von Funktionsmoduldaten und basierend auf lediglich der Eingabe in die Anzeige- und Bedieneinheit erfolgen.

In einer anderen Ausführungsform kann die Eingabe selbst Teil der Funktionsmoduldaten sein, beispielsweise eine im Folgenden eingeführte Gruppennummer, die bei der Eingabe angezeigt wird. In dieser Ausführungsform kann Schritt b) als optionaler Schritt vorgesehen sein, da der Schritt c) bereits durch die Anzeige der Eingabedaten ausgeführt wird, ohne dass weitere Funktionsmoduldaten bereitzustellen sind.

In einer weiteren Ausführungsform ist eine Kombination beider Alternativen der Interaktionseinheit denkbar, wobei die Interaktionseinheit dann eine optische Anzeigeeinheit und eine Betätigungseinheit aufweist. Vorzugsweise wird die optische Anzeigeeinheit in dieser Ausführungsform in Reaktion auf die Betätigung der Betätigungseinheit angesteuert.

Somit kann in einer Ausführungsform, in der die Interaktionseinheit eine Eingabeeinheit, beispielsweise in Form eines Schalters oder eines Tasters, aufweist, die Anzeige der Funktionsmoduldaten in Reaktion auf eine Eingabe in die Interaktionseinheit erfolgen. Alternativ oder zusätzlich kann in dem Fall, in dem die Interaktionseinheit eine Ausgabeeinheit insbesondere in Form einer optischen Anzeigeeinheit aufweist, eine Ausgabe der Interaktionseinheit in Antwort auf angezeigte Funktionsmoduldaten erfolgen. Je nach Eingabe oder Ausgabe einer Interaktion in die beziehungsweise von der Interaktionseinheit ist somit die Kausalitätsreihenfolge umgekehrt. Auf beide Wege ermöglicht das erfindungsgemäße Verfahren eine vorteilhafte Verknüpfung beziehungsweise Korrelation zwischen angezeigten Funktionsmoduldaten und dem zugehörigen physischen Funktionsmodul.

In einer Ausführungsform weist das Identifizieren eines der Funktionsmodule die folgenden Schritte auf:
a) Eingeben eines Suchbegriffes, insbesondere einer Gruppennummer, mittels der Anzeige- und Bedieneinheit,
b) Übermitteln des Suchbegriffes an die zentrale Steuereinheit,
   wobei das Identifizieren basierend auf dem an die zentrale Steuereinheit übermittelten Suchbegriff erfolgt.

Eine Gruppennummer identifiziert bzw. kennzeichnet eine Gruppe von Teilnehmern, die an einen Anschluss bzw. ein Paar von Anschlüssen des Funktionsmoduls anschließbar sind. Ein Funktionsmodul kann beispielsweise Anschlüsse zum Anschluss von vier Gruppen von Teilnehmern aufweisen, ohne darauf beschränkt zu sein. In der Konfiguration der Brandmelder- und/oder Löschsteuerzentrale sind die Gruppennummern demnach wenigstens einem bestimmten Anschluss eines Funktionsmoduls zugeordnet. Obwohl in diesem Beispiel eine Gruppennummer beispielhaft für einen Suchbegriff verwendet wird, können auch andere Suchbegriffe eine Identifikation des Funktionsmoduls ermöglichen. Beispielsweise kann nach einer Kennung des Funktionsmoduls oder nach weiteren Daten, die Teil der Funktionsmoduldaten sind, gesucht werden.

In einer Ausführungsform weist zusätzlich wenigstens ein Teilnehmer, der mit wenigstens einem der Funktionsmodule verbindbar ist, eine Interaktionseinheit zur Interaktion mit dem Bediener auf, wobei das Verfahren so angepasst ist, dass die Anzeige- und Bedieneinheit zu dem Teilnehmer gehörende Teilnehmerdaten und/oder zu dem zugehörigen der Funktionsmodule gehörende Funktionsmoduldaten anzeigt, wobei die Anzeige der Teilnehmerdaten und/oder der Funktionsmoduldaten von einer Interaktion der Interaktionseinheit des Teilnehmers und/oder die Interaktion der Interaktionseinheit des Teilnehmers von der Anzeige der Teilnehmerdaten und/oder Funktionsmoduldaten abhängig ist.

Die Vorteile bei der Identifikation und Zuordnung von Funktionsmodulen erstreckt sich in dieser Ausführungsform darüber hinaus auf die an den Funktionsmodulen angeschlossenen bzw. anschließbaren Teilnehmer. Die Interaktionseinheit der Teilnehmer kann beispielsweise eine Leuchtdiode, einen Alarmtongeber, aber auch Taster oder Schalter oder eine beliebige Kombination davon umfassen. Beispielsweise können bei dem Anzeigen von zu einem Funktionsmodul gehörenden Funktionsmoduldaten eine, mehrere oder sämtliche der Interkationseinheiten der an das Funktionsmodul angeschlossenen Teilnehmer mit dem Benutzer reagieren. So kann zusätzlich kontrolliert werden, ob diese Teilnehmer ordnungsgemäß funktionieren und korrekt angeschlossen sind.

In einer Ausführungsform eines der erfindungsgemäßen Verfahren umfassen die Funktionsmoduldaten Daten aus einer, mehreren oder allen der folgenden Gruppen:
- Informationsdaten, die in der Brandmelder- und/oder Löschsteuerzentrale insbesondere in der zentralen Steuereinheit oder der Anzeige- und Bedieneinheit gespeichert sind, insbesondere wenigstens ein Element aus a) einer Anschlussbelegung, b) einem Datenblatt, c) Hinweisen und/oder d) Hilfsinformationen,
- statische Moduldaten, die in einem Speicher des jeweiligen Funktionsmoduls gespeichert sind, insbesondere wenigstens ein Element aus e) einem Modultyp und Fertigungsdaten wie f) einer Seriennummer, g) einer Losnummer, h) einem Herstelldatum, i) einen Herstellort, j) einer Hardware-Revisionsnummer und/oder k) sonstigen Fertigungsdaten,
- Konfigurationsdaten, die in einem Speicher der zentralen Steuereinheit und/oder in dem Speicher des jeweiligen Funktionsmoduls und/oder in einem Speicher der Brandmelder- und/oder Löschsteuerzentrale gespeichert sind, insbesondere wenigstens ein Element aus I) einer Steckplatznummer, m) einer Gruppe sowie Informationen über die Gruppe, die dem Modul zugeordnet ist und/oder n) einer Adresse des Funktionsmoduls, und
- Laufzeit-Moduldaten, die während der Laufzeit von dem jeweiligen Funktionsmodul erfasst werden, insbesondere wenigstens ein Element aus o) einem Modulfehler, p) einer Modulfehlerhistorie, q) einem aktuellen Modulzustand, r) einer Softwareversion, s) einem Datum der Erstinbetriebnahme, t) Betriebsstunden und/oder u) aktuelle Ströme von Grenzwertgruppen.

Daten einer, mehrerer oder aller der genannten Gruppen können in dem gleichen Speicher oder in verschiedenen Speichern, beispielsweise in einem internen Speichermodul in der zentralen Steuereinheit, einem externen Steuermodul und/oder einem Modulspeicher des Funktionsmoduls gespeichert sein. Die aufgeführten Funktionsmoduldaten sind beispielhaft, in anderen Ausführungsformen können alternativ oder zusätzlich auch andere Funktionsmoduldaten vorhanden sein.

In einer Ausführungsform ist die Brandmelder- und/oder Löschsteuerzentrale eingerichtet, die Anschlüsse wenigstens eines der Funktionsmodule während einer Inbetriebnahme und/oder Wartung in einen Inbetriebnahmemodus bzw. Wartungszustand zu versetzen, wobei die Anschlüsse des oder der Funktionsmodule in dem Inbetriebnahmemodus bzw. Wartungszustand deaktiviert sind.

In diesem Systemzustand beziehungsweise Systemmodus sind die Funktionsmodule vorzugsweise funktionslos geschalten, das heißt, dass keine Ansteuerung von Teilnehmern, beispielsweise von Löschvorrichtungen, erfolgt und keine von Teilnehmern detektierten Ereignisse an übergeordnete Systeme weitergeleitet werden. Damit kann ein ungewolltes Auslösen von Alarmen oder Löschvorgängen mit allen dazugehörigen Konsequenzen verhindert werden. Vorzugsweise kann der Wartungszustand bzw. Inbetriebnahmemodus über die Anzeige- und Bedieneinheit aktiviert werden, und weiter vorzugsweise kann der Inbetriebnahmemodus nach Abschluss der Inbetriebnahme und/oder Wartung mittels der Anzeige- und Bedieneinheit deaktiviert werden. Durch die Deaktivierung des Inbetriebnahmemodus werden die Anschlüsse des oder der Funktionsmodule aktiviert und die Brandmelder- und/oder Löschsteuerzentrale funktionsfähig.

In einer Ausführungsform ist die Anzeige- und Bedieneinheit dazu eingerichtet, die Funktionsmoduldaten unter Verwendung eines Browsers, der auf einen Webserver zugreift, anzuzeigen. Der Webserver kann beispielsweise in der zentralen Steuereinheit selbst oder auf einem entfernt angeordneten Server bereitgestellt werden. In anderen Ausführungsformen sind auch andere Anzeigetechnologien, beispielsweise in Form von Anwendungsprogrammen, vorstellbar.

In einer Ausführungsform ist die Anzeige- und Bedieneinheit dazu eingerichtet, Fehlerinformationen, die einem bestimmten Teilnehmer oder einem Funktionsmodul zugeordnet sind, anzuzeigen. Die Fehlerinformationen sind, entweder direkt oder indirekt, da die Gruppe von Teilnehmern umfassend den bestimmten Teilnehmer einem Funktionsmodul zugeordnet ist, einem Funktionsmodul zugeordnet und können somit Teil der Funktionsmoduldaten sein. Ausgehend von der Anzeige der Fehlerinformationen kann ein Wartungstechniker eine Interaktion der Interaktionseinheit des zugehörigen Funktionsmoduls bewirken und die Wartung besonders effizient ausführen, da die Lokalisierung des Fehlers vereinfacht ist.

Vorzugsweise kann darüber hinaus beispielsweise über eine Farbcodierung einer optischen Anzeigeeinheit die Schwere des Fehlers, beispielsweise eine abgestufte Anzeige zwischen grün, orange und rot, angezeigt werden. Sobald der Fehler behoben ist, kann die Anzeige der Fehlerinformationen und/oder die auf den Fehler angepasste Anzeige der optischen Anzeigeeinheit beendet werden.

Gemäß einem weiteren Aspekt wird ein System zur Inbetriebnahme und/oder Wartung einer Brandmelder- und/oder Löschsteuerzentrale gemäß Anspruch 7 bereitgestellt. Das erfindungsgemäße System ermöglicht dieselben Vorzüge, wie sie bereits für die diversen Ausführungsformen und Aspekte des erfindungsgemäßen Verfahrens beschrieben wurden. Ebenso sind die bevorzugten Ausgestaltungen des Verfahrens in vorteilhafter Weise auch auf das erfindungsgemäße System übertragbar.

Gemäß einem weiteren Aspekt wird eine Anzeige- und Bedieneinheit zur Verwendung in einem erfindungsgemäßen System gemäß Anspruch 8 bereitgestellt.

Indem die Anzeige der Funktionsmoduldaten von einer Interaktion der Interaktionseinheit und/oder die Interaktion der Interaktionseinheit von der Anzeige der Funktionsmoduldaten abhängig ist, ermöglicht die erfindungsgemäße Anzeige- und Bedieneinheit die vorteilhafte Korrelation beziehungsweise Verbindung aus angezeigten Funktionsmoduldaten und zugehörigem Funktionsmodul. Eine Inbetriebnahme und/oder Wartung ist demnach mit verringerter Fehleranfälligkeit und verringertem Aufwand möglich.

Die Anzeige- und Bedieneinheit kann kabelgebunden oder drahtlos mit der zentralen Steuereinrichtung der Brandmelder- und/oder Löschsteuerzentrale kommunizieren.

Bei der erfindungsgemäßen Anzeige- und Bedieneinheit kann es sich beispielsweise um einen portablen Computer, insbesondere einen Notebook, ein Tablet oder ein Smartphone handeln, die mit entsprechender Software zur Verwendung in dem erfindungsgemäßen System zur Inbetriebnahme und/oder Wartung einer Brandmelder- und/oder Löschsteuerzentrale vorbereitet ist.

Weitere Ausführungsformen ergeben sich anhand der im Folgenden näher beschriebenen Ausführungsbeispiele. Dazu zeigen:
- Fig. 1: ein Ausführungsbeispiel der erfindungsgemäßen Vorrichtung,
- Fig. 2: ein weiteres Ausführungsbeispiel der erfindungsgemäßen Vorrichtung,
- Fig. 3: die Schritte eines Ausführungsbeispiels des erfindungsgemäßen Verfahrens sowie
- Fig. 4: die Schritte eines weiteren Ausführungsbeispiels des erfindungsgemäßen Verfahrens.

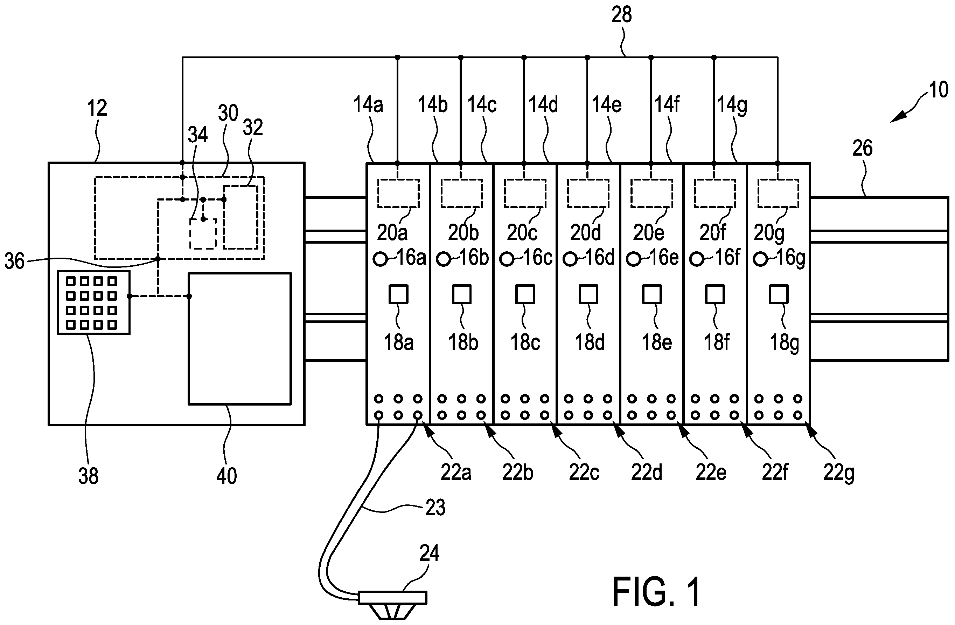

Fig. 1 zeigt eine Brandmelder- und/oder Löschsteuerzentrale 10, die eine Zentralkomponente 12 und mehrere mit der Zentralkomponente 12 durch ein Bussystem 28 verbundene Funktionsmodule 14a bis 14g aufweist. Die Brandmelder- und/oder Löschsteuerzentrale ist beispielsweise in einem Schaltschrank (nicht gezeigt) montiert, aus dem Anschlussleitungen 23 zu Teilnehmern 24, z. B. Branddetektoren, Funkendetektoren oder beliebige andere Sensor- oder Aktorkomponenten, geführt werden.

Die Funktionsmodule 14a bis 14g weisen jeweils eine Leuchteinheit 16a bis 16g sowie einen Schalter oder Taster 18a bis 18g auf. Als Teil der Funktionsmodule 14a bis 14g sind jeweils optionale Speicher 20a bis 20g angeordnet, die mit strichlierten Linien dargestellt sind. Jedes der Funktionsmodule 14a bis 14g weist vorliegend mehrere Anschlüsse 22a bis 22g auf. Bei diesem Ausführungsbeispiel weist jedes der Funktionsmodule 14a bis 14g genau sechs Anschlüsse 22a bis 22g auf. Gemäß anderen Ausführungsbeispielen weisen die Funktionsmodule 14a bis 14g eine beliebige, aber ihrer Funktion entsprechende, Anzahl von Anschlüssen 22a bis 22g auf. Die hier dargestellte Anzahl von Anschlüssen ist nur exemplarisch gewählt.

An die Anschlüssen 22a bis 22g können ein oder mehrere Teilnehmer 24, die z. B. wie oben erwähnt Branddetektoren, Funkendetektoren oder beliebige andere Sensor- oder Aktorkomponenten umfassen, an eine Brandmelder- und/oder Löschsteuerzentrale 10 angeschlossen werden. Vorliegend ist ein schematisch dargestellter Brandmelder mit zweien der Anschlüsse 22a des Funktionsmoduls 14a über elektrische Leitungen 23 verbunden.

An einen Anschluss bzw. ein Paar von Anschlüssen wird eine Gruppe von Teilnehmern 24, die wie in der Fig. 1 gezeigt einen oder in anderen Beispielen auch mehrere Teilnehmer 24 umfassen kann, angeschlossen. Jede Gruppe von Teilnehmern wird durch eine Gruppennummer gekennzeichnet bzw. identifiziert. In dem Schaltplan der Brandmelder- und/oder Löschsteuerzentrale 10 wird die Zuordnung von Gruppen, die durch eine Gruppennummer identifiziert sind, zu bestimmten Anschlüssen 22a bis 22g eines bestimmten Funktionsmoduls 14a bis 14g festgelegt. Bei der Inbetriebnahme und/oder Wartung der Brandmelder- und/oder Löschsteuerzentrale muss sichergestellt werden, dass die Leitungen der jeweiligen Gruppen von Teilnehmern 24 mit den richtigen Anschlüssen 22a bis 22g verbunden sind bzw. werden.

Die Funktionsmodule 14a bis 14g sind, wie erwähnt, vorzugsweise innerhalb eines Gehäuses (nicht gezeigt) der Brandmelder- und/oder Löschsteuerzentrale 10, das beispielsweise in Form eines Schaltschrankes ausgestaltet ist, angeordnet. Die Teilnehmer 24 sind demgegenüber außerhalb des Schaltschranks in einem zu überwachenden Gebäude, Gebäudekomplex oder Areal angeordnet. Anders ausgedrückt können - mit Ausnahme der Teilnehmer 24 - alle der in Fig. 1 gezeigten Komponenten innerhalb des Gehäuses der Brandmelder- und/oder Löschsteuerzentrale 10 angeordnet sein. Die elektrischen Leitungen 23 zwischen den Funktionsmodulen 14a bis 14g sowie den Teilnehmern 24 können tatsächlich wesentlich länger sein, als sie hier zur besseren Übersicht in Fig. 1 dargestellt sind.

Die Funktionsmodule 14a bis 14g sind über eine Datenverbindung, beispielsweise ein Bussystem 28, mit einer zentralen Steuereinheit 30 verbunden. Die zentrale Steuereinheit 30 ist als Teil der Zentralkomponente 12 ausgebildet und umfasst einen Speicher 32 sowie einen Prozessor 34. Außerdem umfasst die zentrale Steuereinheit 30 eine Datenschnittstelle 36. Diese Datenschnittstelle 36 ist hier als interne Datenschnittstelle dargestellt. Die Datenschnittstelle 36 ist mit einer Benutzereingabeeinheit 38 sowie einer Anzeigeeinheit 40, die im vorliegenden Ausführungsbeispiel Bestandteil der Brandmelder- und/oder Löschsteuerzentrale 10 sind, verbunden. Die Benutzereingabeeinheit 38 sowie die Anzeigeeinheit 40 können auch als eine kombinierte Anzeige- und Bedieneinheit, beispielsweise in Form eines Tastbildschirms, ausgestaltet sein.

Zusätzlich wird in diesem Ausführungsbeispiel nach einer Betätigung des Tasters 18a die Leuchteinheit 16a des Funktionsmoduls 14a aktiviert, sodass diese leuchtet. Die Leuchteinheit 16a ist beispielsweise eine mehrfarbige Leuchtdiode, die in Abhängigkeit des Betriebsmodus des Funktionsmoduls 14a in einer vordefinierten Farbe leuchtet. Beispielsweise leuchtet die Leuchteinheit 16a grün, wenn sich das Funktionsmodul 14a im normalen Betrieb befindet. Sind beispielsweise die Anschlüsse 22a noch nicht mit Teilnehmern 24 verbunden und das Funktionsmodul 14a daher noch nicht einsatzbereit, so leuchtet die Leuchteinheit 16a gelb. Bei einer Störung des Funktionsmoduls 14a oder eines der daran angeschlossenen Teilnehmer 24 leuchtet die Leuchteinheit 16a beispielsweise rot. Alternativ kann die Leuchteinheit 16a in unterschiedlicher Intensität leuchten oder auch mit unterschiedlicher Geschwindigkeit blinken, nur um ein paar Beispiele zu nennen.

Durch Betätigung des Tasters 18a bis 18g kann ein Informationsmodus des Funktionsmoduls 14a aktiviert werden, wobei der Informationsmodus der Funktionsmodule 14a bis 14g in anderen Ausführungsformen auch beispielsweise alternativ oder zusätzlich durch die Benutzereingabeeinheit 38 aktiviert werden kann. In dem Informationsmodus liegt vorzugsweise keine elektrische Spannung an den Anschlüssen 22a bis 22g an, um ein ungewolltes Auslösen von Alarmen oder Löschvorgängen mit allen dazugehörigen Konsequenzen zu verhindern und Stromschläge oder Beschädigungen beim Anschließen der Anschlussleitungen 23 zu vermeiden.

Gemäß dem Beispiel, bei dem der Schalter oder Taster 18a betätigt wurde und die Leuchteinheit 16a, aktiviert durch den Prozessor 34 der zentralen Steuereinheit 30, nun leuchtet, werden außerdem beispielsweise aus dem Speicher 20a für das Funktionsmodul 14a hinterlegte Informationen von dem Prozessor 34 abgerufen und über die Datenschnittstelle 36 zur Anzeige mit der Anzeigeeinheit 40 ausgegeben. Diese Informationen zeigen z. B. auf, dass das Funktionsmodul 14a an seinen Anschlüssen 22a genau mit dem dargestellten Teilnehmer 24 entsprechend der Darstellung in Fig. 1 verbunden ist bzw. verbunden werden soll. Für den Fall, dass der Teilnehmer 24 also noch nicht verbunden ist, wird dem Personal, das die Inbetriebnahme vornimmt, vorgegeben, wo nun der Teilnehmer 24 genau anzuschließen ist. In anderen Ausführungsbeispielen werden die Funktionsmoduldaten teilweise oder vollständig aus anderen Speichern, beispielsweise dem Speicher 32 der Zentralkomponente 12 oder einem entfernt angeordneten Speicher, beispielsweise auf einem Server, der mit der Brandmelder- und/oder Löschsteuerzentrale über das Internet verbunden ist, geladen.

Gemäß der Erfindung ist die Brandmelder- und/oder Löschsteuerzentrale 10 somit so eingerichtet, dass bei der Inbetriebnahme oder Wartung ein Benutzer eine vereinfachte Möglichkeit zum Finden der korrekten Anschlüsse 22a bis 22g für den Teilnehmer 24 beziehungsweise die Gruppe von Teilnehmern 24 erhält. Das Verfahren soll exemplarisch am Funktionsmodul 14a beschrieben werden. Ein Benutzer drückt den Schalter oder Taster 18a, woraufhin mit dem Prozessor 34 das Aktivieren des Schalters oder Tasters 18a über das Bussystem 28 festgestellt wird. Der Prozessor 34 kann daraufhin Funktionsmoduldaten, die insbesondere Informationen der an die Anschlüsse 22a anzuschließenden Teilnehmer beziehungsweise Teilnehmergruppen enthält, auf der Anzeigeeinheit 40 darstellen. Dies ermöglicht, dass die Anzeige der Anzeigeeinheit 40 den Anschluss der Gruppen von Teilnehmern 24 an die Anschlüsse 22a unterstützt, da die Zuordnung vereinfacht wird, indem genau die Anschlussdaten auf der Anzeigeeinheit 40 angezeigt werden, die zu dem Funktionsmodul 14a gehören, dessen Taster 18a gedrückt wurde.

In einem Ausführungsbeispiel können die Anschlussleitungen 23 und/oder die Anschlüsse 22a beispielsweise eine Farbkodierung aufweisen, die zur Unterstützung des Anschlusses auf der Anzeigeeinheit 40 angezeigt wird und die Zuordnung einer Anschlussleitung 23 zu den richtigen der Anschlüsse 22a bis 22g erleichtert.

Beispielsweise kann die Anzeige der Anschlussbelegung eine grafische Repräsentation der Anschlüsse 22a bis 22g umfassen, wobei alle mit rot in der Anzeige hinterlegten Anschlüsse einem Anschluss des Pluspols der Anschlussleitung 23 entsprechen und alle mit blau in der Anzeige hinterlegten Anschlüsse einen Anschluss des Minuspols der jeweiligen Anschlussleitung 23 entsprechen. Vorzugsweise ist eine entsprechende Farbcodierung auch der Anschlussleitung 23 entnehmbar. Neben der grafischen Repräsentation der Anschlüsse 22a bis 22g bzw. des gesamten Funktionsmoduls 14a bis 14 g kann an entsprechender Stelle eine Gruppennummer, die den jeweiligen Anschlüssen zugeordnet ist, angezeigt werden.

In einem Ausführungsbeispiel können zu dem Funktionsmodul 14a gehörende Funktionsmoduldaten in drei Abschnitten, beispielsweise untereinander, als Reiter, Tabs und/oder Frames, angezeigt werden. Der erste Abschnitt umfasst die soeben beschriebene Anschlussbelegung. In einem zweiten Abschnitt werden weitere Funktionsmoduldaten, wie beispielsweise Hardwareversion, Softwareversion, Datum der Erstinbetriebnahme, Betriebsstunden und aktuelle Ströme der Grenzwertgruppen angezeigt. In einem dritten Abschnitt können Fehlerinformationen, betreffend das Funktionsmodul 14a bzw. die daran anzuschließenden Teilnehmergruppen angezeigt werden, die eine vereinfachte Wartung ermöglichen. In anderen Ausführungsbeispielen kann die Anzeige natürlich auch anders gestaltet sein und alternative oder zusätzliche Elemente umfassen.

Bislang wurde das Verfahren beschrieben, bei dem als Antwort auf eine Interaktion mit dem Taster 18a Funktionsmoduldaten, die zu dem Funktionsmodul 14a gehören, auf der Anzeigeeinheit 40 angezeigt werden. Auch der umgekehrte Fall ist denkbar, bei dem zunächst eine Eingabe mittels der Benutzereingabeeinheit 38 getätigt wird, worauf die Anzeigeeinheit 40 Funktionsmoduldaten eines der Funktionsmodule 14a bis 14g anzeigt. In Antwort darauf folgt eine Interaktion des entsprechenden Funktionsmoduls 14a bis 14g, insbesondere wird die zugehörige Leuchteinheit 16a bis 16g angesteuert. Wie oben ausgeführt umfasst das Ansteuern ein Einschalten, ein Steuern in einem blinkenden Zustand oder, bei einer farbigen Leuchteinheit, ein Betreiben mit einer bestimmten Farbe. In diesem Ausführungsbeispiel kann über die Benutzereingabeeinheit 38 beispielsweise eine Gruppennummer einer bestimmten Gruppe von Teilnehmern 24 eingegeben werden. Jede Gruppe, die über eine bestimmte Gruppennummer identifiziert wird, ist einem der Funktionsmodule 14a bis 14g zugeordnet. Somit kann beispielsweise ein Installateur, der die Brandmelder- und/oder Löschsteuerzentrale 10 in Betrieb nimmt, die Anschlüsse einer bestimmten Anschlussgruppe in der Hand halten, deren Nummer mittels der Benutzereingabeeinheit 38 suchen und über die Anzeigeeinheit 40 die Anschlussposition des entsprechenden Funktionsmoduls 14a bis 14g angezeigt bekommen. Zusätzlich interagiert das entsprechende Funktionsmodul 14a bis 14g mit dem Benutzer durch Ansteuern der zugehörigen Leuchteinheit 16a bis 16g. Die Kombination der angezeigten Information auf der Anzeigeeinheit 40 mit der Interaktion der Leuchteinheit 16a bis 16g sorgt dafür, dass der Anschluss der Teilnehmer 24, beziehungsweise der Gruppe von Teilnehmern 24, an die richtigen der Anschlüsse 22a bis 22g vereinfacht wird.

In diesem Beispiel umfassen die Funktionsmoduldaten, die angezeigt werden, insbesondere die Anschlusskonfiguration einer der Gruppen von Anschlüssen 22a bis 22g. Je nach Konfiguration der Brandmelder- und/oder Löschsteuerzentrale 10 können weitere Informationen des Funktionsmoduls 14a bis 14g angezeigt werden, die entweder aus dem Speicher des Funktionsmoduls 14a bis 14g beziehungsweise aus einem anderen Speicher abgerufen werden.

Zusammenfassend kann der Benutzer, der zuvor die Kennung des Teilnehmers 24 oder die Gruppennummer der Gruppe, zu der der Teilnehmer 24 gehört, über die Benutzereingabeeinheit 38 eingegeben hat, durch das Einschalten der Leuchteinheit 16a sofort erkennen, dass der Teilnehmer 24 mit dem Funktionsmodul 14a zu verbinden ist. Auf der Anzeigeeinheit 40 sind zudem genaue Informationen, beispielsweise die genauen Anschlüsse 22a, an die die elektrischen Leitungen 23 des Teilnehmers 24 anzuschließen sind, grafisch dargestellt. Eine Installation ist somit einfach und weniger fehleranfällig möglich.

Ferner kann das Konzept auch auf die individuellen Teilnehmer 24 übertragen werden, die ebenfalls über eine Interaktionseinheit verfügen können. Dann kann beispielsweise durch eine Eingabe in die bzw. eine Interaktion mit der zu dem Teilnehmer 24 gehörenden Interaktionseinheit, die beispielsweise als Schalter, Taster oder ähnliches ausgestaltet sein kann, veranlasst wird, dass auf der Anzeigeeinheit 40 Funktionsmoduldaten, die zu demjenigen der Funktionsmoduls 14a bis 14g gehören, an das der ausgelöste Teilnehmer 24 gehört, angezeigt werden. Alternativ oder zusätzlich zu der Anzeige der Funktionsmoduldaten können auch Daten betreffend den ausgelösten Teilnehmer 24 selbst angezeigt werden.

Umgekehrt kann ebenso durch eine Eingabe zur Bedienung bzw. Betätigung der Anzeigeeinheit 40, beispielsweise durch Auswahl einer Teilnehmergruppe oder einfach durch Anzeigen von Funktionsmoduldaten eines Funktionsmoduls 14a bis 14g, eine Interaktion der Interaktionseinheit selektiver Teilnehmer 24, beispielsweise aller Teilnehmer 24 einer Gruppe oder sämtlicher an ein Modul angeschlossener Teilnehmer 24, ausgelöst werden. Alternativ oder zusätzlich kann auch ein einzelner Teilnehmer 24 ausgewählt bzw. zu einem einzelnen Teilnehmer gehörende Daten angezeigt werden, um eine Interaktion der zugehörigen Interaktionseinheit des Teilnehmers 24 auszulösen. Die Interaktionseinheit kann beispielsweise einen Lichtsignalgeber wie eine LED oder auch einen Alarmsignalgeber umfassen.

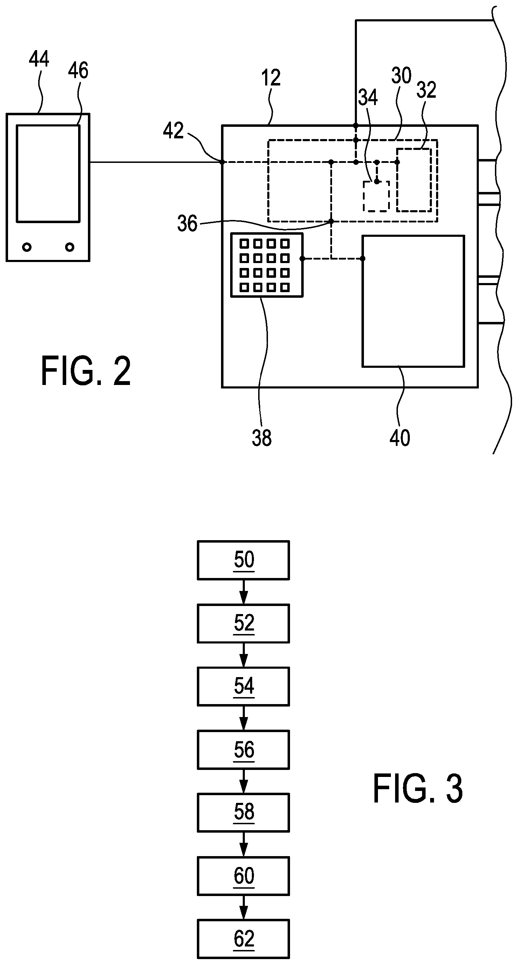

Fig. 2 zeigt ein weiteres Ausführungsbeispiel, wobei hier anstelle der ganzen Brandmelder- und/oder Löschsteuerzentrale 10 nur die Zentralkomponente 12 dargestellt ist. In diesem Ausführungsbeispiel weist die Brandmelder- und/oder Löschsteuerzentrale 10 eine weitere Datenschnittstelle 42 auf, die eingerichtet ist, mit einer externen Anzeigeeinheit oder einer externen Benutzereingabeeinheit drahtgebunden oder drahtlos verbunden zu werden. In dem vorliegenden Beispiel ist die weitere Datenschnittstelle 42 mit einem Tabletcomputer 44 verbunden, der ein berührungsempfindliches Display 46 aufweist, das eine kombinierte Anzeige- und Bedieneinheit darstellt. Die externe Anzeigeeinheit und/oder Benutzereingabeeinheit kann alternativ oder zusätzlich zu der internen Anzeigeeinheit 40 beziehungsweise Benutzereingabeeinheit 38 vorgesehen werden. Obwohl in diesem Beispiel ein Tabletcomputer 44 als externe Anzeigeeinheit beziehungsweise Benutzereingabeeinheit verwendet wird, so sind in anderen Ausführungsbeispielen auch PCs, Notebooks, eigenentwickelte Vorrichtungen oder Smartphones vorstellbar.

Besonders vorteilhaft hat sich herausgestellt, wenn die externe Anzeigeeinheit über eine Funktion zur erweiterten Realität bzw. "virtual reality" verfügt. Funktionsmoduldaten oder andere für die Inbetriebnahme und/oder Wartung relevante Informationen können dadurch über die Realität, beispielsweise über ein von einer Kamera aufgenommenes Photo bzw. einen Ausschnitt davon, überlagert und somit direkt an der betreffenden Stelle bereitgestellt werden. Vorzugsweise weist der Tabletcomputer 44 Funktionen zur erweiterten Realität auf, wobei ebenso eine Datenbrille oder andere geeignete Vorrichtungen einsetzbar sind. Besonders die Datenbrille hat den Vorteil, dass der Monteur zum Arbeiten beide Hände zur Verfügung hat.

Fig. 3 zeigt die Schritte eines Ausführungsbeispiels des erfindungsgemäßen Verfahrens. In Schritt 50 wird ein Schalter oder Taster 18a bis 18g eines der Funktionsmodule 14a bis 14g betätigt. Durch Betätigen des Schalters oder Tasters 18a bis 18g wird im Schritt 52 optional ein Informationsmodus des zugehörigen Funktionsmoduls 14a bis 14g, dessen Schalter oder Taster 18a bis 18g betätigt wurde, aktiviert. In dem Informationsmodus sind vorzugsweise die Anschlüsse 22a bis 22g wenigstens des zugehörigen der Funktionsmodule 14a bis 14g spannungsfrei.

In Schritt 54 werden für das Funktionsmodul 14a bis 14g, dessen Taster gedrückt wurde, Funktionsmoduldaten an der internen oder externen Anzeigeeinheit 40 dargestellt.

In Schritt 56 werden, optional und unabhängig von Schritt 54, Leuchteinheiten 16a bis 16g des beziehungsweise der Funktionsmodule 14a bis 14g angesteuert, dessen beziehungsweise deren Informationsmodus durch Drücken des zugehörigen Schalters oder Tasters 18a bis 18g aktiviert wurde.

Schritt 58 bezeichnet ein Deaktivieren des Informationsmodus, das heißt, dass das oder die Funktionsmodule wieder in einen Betriebsmodus übergehen, in dem Spannung auf den Anschlüssen 22a bis 22g liegt. Der Übergang in den Betriebsmodus erfolgt entweder in einer Ausführungsform durch erneutes Betätigen des Schalters oder Tasters 18a bis 18g oder, in einem anderen Ausführungsbeispiel, durch eine Eingabe in die Benutzereingabeeinheit 38.

In dem anschließenden optionalen Schritt 60 kann dann die zuvor eingeschaltete Leuchteinheit 16a bis 16g wieder ausgeschaltet werden und in dem abschließenden optionalen Schritt 62 die Anzeige der Anzeigeeinheit 40 wieder derart abgeändert werden, dass die Funktionsmoduldaten der Funktionsmodule 14a bis 14g nicht mehr angezeigt werden. Beispielsweise kann die Anzeigeeinheit 40 in einen Ruhezustand oder eine Standardanzeige übergehen.

Das Verfahren kann beliebig oft für unterschiedliche Funktionsmodule 14a bis 14g nacheinander oder für mehrere Funktionsmodule 14a bis 14g gleichzeitig ausgeführt werden.

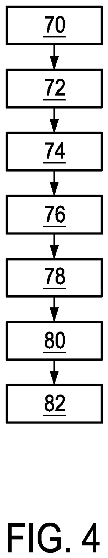

Fig. 4 zeigt die Schritte eines weiteren Ausführungsbeispiels des erfindungsgemäßen Verfahrens. Das in Fig. 4 gezeigte Szenario unterscheidet sich von dem in Fig. 3 gezeigten Szenario dahingehend, dass der Ursprung der Interaktion des Funktionsmoduls 14a bis 14g das Funktionsmodul selbst und nicht der Bediener ist, der eine Eingabe in das Funktionsmodul tätigt. In Schritt 70 wird mittels der Bedienereingabeeinheit 38 eine Eingabe getätigt, mit der beispielsweise nach einer bestimmten Teilnehmergruppe gesucht wird.

In Schritt 72 werden die zu dem eingegebenen Suchbegriff gehörigen Funktionsmoduldaten beziehungsweise das zugehörige Funktionsmodul 14a bis 14g identifiziert.

In Schritt 74 wird die Leuchteinheit 16a bis 16g, die zu dem identifizierten der Funktionsmodule 14a bis 14g gehört, angesteuert, beispielsweise zum Leuchten gebracht. Zusätzlich können Funktionsmoduldaten des entsprechenden Funktionsmoduls 14a bis 14g in der Anzeigeeinheit 40 angezeigt werden.

In dem optionalen Schritt 76 kann das zugehörige der Funktionsmodule 14a bis 14g oder sämtliche der Funktionsmodule 14a bis 14g in einen Informationsmodus geschaltet werden, in dem die Anschlüsse 22a bis 22g spannungsfrei sind. Das Schalten in den Informationsmodus kann automatisch erfolgen oder von einer Benutzereingabe abhängen.

Wenn in einem Schritt 78 die Anzeige der Anzeigeeinheit geändert wird, sodass die Funktionsmoduldaten des zugehörigen der Funktionsmodule 14a bis 14g nicht mehr angezeigt werden, beispielsweise aufgrund einer Benutzereingabe in die Benutzereingabeeinheit 38, wird in einem darauf folgenden Schritt 80 die Ansteuerung der entsprechenden Leuchteinheit 16a bis 16g geändert, beispielsweise wird ein Leuchten der Einheit beendet. Abschließend kann in einem optionalen Schritt 82 auch der Informationsmodus des beziehungsweise der Funktionsmodule 14a bis 14g beendet werden. Auch dies kann entweder automatisch oder basierend auf einer Benutzereingabe erfolgen.

Funktionsmoduldaten können beispielsweise Informationsdaten umfassen, die in der Vorrichtung beziehungsweise dem System einschließlich der Anzeige- und Bedieneinheit 38, 40 gespeichert sind. Die Informationsdaten können eine Anschlussbelegung umfassen, das heißt beispielsweise plus, minus et cetera, die festlegen, wie die Anschlüsse 22a bis 22g der Funktionsmodule 14a bis 14g anzuschließen sind. Zusätzlich können die Informationsdaten Hilfsinformationen, wie beispielsweise Datenblätter, Hinweise, die den Umgang mit dem Funktionsmodul 14a bis 14g beschreiben und vieles Weitere umfassen. Die Informationsdaten können durch Übertragung von Konfigurationsdaten an die zentrale Steuereinheit 30 der Brandmelder- und/oder Löschsteuerzentrale 10 und/oder eine Rechnereinheit eines der Funktionsmodule 14a bis 14g übertragen werden.

Die Funktionsmoduldaten können weiter statische Moduldaten, wie beispielsweise einen Modultyp, Fertigungsdaten wie eine Seriennummer, eine Losnummer, ein Herstelldatum, einen Herstellort, eine Hardware-Revisionsnummer und weitere Fertigungsdaten umfassen. Diese sind vorzugsweise in einem Speicher 20a bis 20g des jeweiligen Funktionsmoduls 14a bis 14g gespeichert.

Ferner können die Funktionsmoduldaten Konfigurationsdaten enthalten, wie beispielsweise eine Steckplatznummer, eine Adresse des Funktionsmoduls 14a bis 14g und mindestens eine Bezeichnung einer Gruppe von Teilnehmern 24 sowie Informationen über die Gruppe, die einem der Funktionsmodule 14a bis 14g zugeordnet ist. Beispielsweise kann diese Information den genauen Anschluss 22a bis 22g enthalten, an den die Gruppe anzuschließen ist. Die Konfigurationsdaten können in dem Speicher 32 der zentralen Steuereinheit 34 und/oder im Speicher des Funktionsmoduls 14a bis 14g oder in einem weiteren, beispielsweise einem externen Speicher, hinterlegt sein.

Als weiteres Beispiel können die Funktionsmoduldaten Laufzeitmoduldaten umfassen, die beispielsweise einen Fehler, eine Fehlerhistorie und einen aktuellen Zustand des Funktionsmoduls 14a bis 14g beinhalten. Beispielsweise kann in dem Fall, dass es sich bei einem der Funktionsmodule 14a bis 14g um ein Grenzwertmodul handelt, der aktuelle Modulzustand angeben, dass bei einem Grenzwertmodul Linien ausgelöst sind. Hierbei können aktuelle Linienströme angezeigt werden. Weitere Laufzeitmoduldaten können beispielsweise eine Softwareversion, eine Erstinbetriebnahme, Betriebsstunden und aktuelle Ströme der Grenzwertgruppen umfassen. Die Laufzeitmoduldaten werden vorzugsweise während der Laufzeit von dem Funktionsmodul 14a bis 14g erfasst und in einem Speicher, wie beispielsweise dem Speicher 32 der zentralen Steuereinheit 30 und/oder im Speicher des Funktionsmoduls 14a bis 14g gespeichert. In anderen Ausführungsbeispielen können die Funktionsmoduldaten auch weitere Daten enthalten.

Die Erfindung betrifft somit ein Verfahren zur Unterstützung bei Inbetriebnahme und/oder Wartung einer Brandmelder- und/oder Löschsteuerzentrale 12, umfassend eine zentrale Steuereinheit 30, mehrere Funktionsmodule 14a-14g und mindestens eine Datenschnittstelle 36. Mittels der Datenschnittstelle 36 ist eine Anzeigeeinheit 40 mit der zentralen Steuereinheit 30 verbunden und jedem der Funktionsmodule 14a-14g ist jeweils ein Informationsmodus, der aktivierbar und deaktivierbar ist, zugeordnet. Für jedes der Funktionsmodule 14a-14g sind jeweils Informationen hinterlegt, wobei durch Aktivieren des Informationsmodus eines Funktionsmoduls 14a-14g die hinterlegten Informationen des Funktionsmoduls 14a-14g, dessen Informationsmodus aktiviert wurde, mit der Anzeigeeinheit 40 oder Tabletcomputer 44 dargestellt werden. Die Erfindung betrifft ferner ein System zur Ausführung des Verfahrens sowie ein Funktionsmodul.

### Bezugszeichenliste

- 10: Brandmelder- und/oder Löschsteuerzentrale
- 12: Zentralkomponente
- 14a bis 14g: Funktionsmodule
- 16a bis 16g: Leuchteinheiten
- 18a bis 18g: Schalter oder Taster
- 20a bis 20g: Speicher der Funktionsmodule
- 22a bis 22g: Anschlüsse der Funktionsmodule
- 23: Elektrische Leitungen
- 24: Teilnehmer
- 26: Hutschiene
- 28: Bussystem
- 30: Zentrale Steuereinheit
- 32: Speicher der zentralen Steuereinheit
- 34: Prozessor der zentralen Steuereinheit
- 36: Schnittstelle der zentralen Steuereinheit
- 38: Benutzereingabeeinheit
- 40: Anzeigeeinheit
- 42: Weitere Datenschnittstelle
- 44: Tabletcomputer
- 46: Display
- 50 bis 82: Schritte des Verfahrens

## Patentansprüche

1. Verfahren zur Inbetriebnahme und/oder Wartung einer Brandmelder- und/oder Löschsteuerzentrale (12) mittels einer Anzeige- und Bedieneinheit (38, 40-44, 46),
wobei die Brandmelder- und/oder Löschsteuerzentrale (12) eine zentrale Steuereinheit (30) und mehrere mit der zentralen Steuereinheit (30) verbundene Funktionsmodule (14a-14g) aufweist,
wobei die Anzeige- und Bedieneinheit (38, 40-44, 46) mit der zentralen Steuereinheit (30) verbunden oder verbindbar ist,
wobei jedes der Funktionsmodule (14a-14g) mehrere Anschlüsse zum Anschließen von Teilnehmern, insbesondere Brandmeldern, Signalgebern und/oder Aktoren, und eine Interaktionseinheit mit einer optischen Anzeigeeinheit (16a- 16g) zur Signalisierung an einen Bediener aufweist,
wobei das Verfahren so angepasst ist, dass die Anzeige- und Bedieneinheit (38, 40-44, 46) zu einem der Funktionsmodule (14a-14g) gehörende Funktionsmoduldaten anzeigt und die Signalisierung der Anzeigeeinheit des Funktionsmoduls (14a-14g) von der Anzeige der Funktionsmoduldaten abhängig ist, wobei das Verfahren umfasst:
- Identifizieren eines der Funktionsmodule (14a-14g) basierend auf einer Eingabe in die Anzeige- und Bedieneinheit (38, 40-44, 46),
- Bereitstellen von zu dem identifizierten Funktionsmodul (14a-14g) gehörenden Funktionsmoduldaten,
- Anzeigen der Funktionsmoduldaten auf der Anzeige- und Bedieneinheit (38, 40-44, 46) und
- Ansteuern der optischen Anzeigeeinheit (16a-16g) des identifizierten Funktionsmoduls (14a-14g).

2. Verfahren nach Anspruch 1, wobei die Interaktionseinheit ein Betätigungselement (18a-18g), insbesondere einen Schalter oder einen Taster, umfasst, wobei das Verfahren die folgenden Schritte umfasst:
- Betätigung des Betätigungselementes eines der Funktionsmodule (14a-14g) durch den Bediener,
- Identifikation des der Betätigung zugehörigen Funktionsmoduls (14a-14g),
- Bereitstellen von Funktionsmoduldaten des identifizierten Funktionsmoduls (14a-14g) und
- Anzeigen der Funktionsmoduldaten auf der Anzeige- und Bedieneinheit (38, 40-44, 46).

3. Verfahren nach Anspruch 2, wobei das Funktionsmodul bei Betätigung des Betätigungselementes eine Kennung an die zentrale Steuereinheit (30) übermittelt, wobei die zentrale Steuereinheit (30) die Funktionsmoduldaten basierend auf der Kennung bereitstellt.

4. Verfahren nach Anspruch 3, wobei das Funktionsmodul (14a-14g) die Funktionsmoduldaten zumindest teilweise zusätzlich zu der Kennung an die zentrale Steuereinheit (30) übermittelt und/oder die zentrale Steuereinheit (30) die Funktionsmoduldaten basierend auf der Kennung aus einem Speicher ausliest.

5. Verfahren nach einem der vorstehenden Ansprüche, wobei das Identifizieren eines der Funktionsmodule (14a-14g) die folgenden Schritte aufweist:
- Eingeben eines Suchbegriffes, insbesondere einer Gruppennummer, mittels der Anzeige- und Bedieneinheit (38, 40-44, 46),
- Übermitteln des Suchbegriffes an die zentrale Steuereinheit (30),
wobei das Identifizieren basierend auf dem an die zentrale Steuereinheit (30) übermittelten Suchbegriff erfolgt.

6. Verfahren nach einem der vorstehenden Ansprüche,
wobei zusätzlich wenigstens ein Teilnehmer, der mit wenigstens einem der Funktionsmodule (14a-14g) verbindbar ist, eine Interaktionseinheit zur Interaktion mit dem Bediener aufweist,
wobei das Verfahren so angepasst ist, dass die Anzeige- und Bedieneinheit (38, 40-44, 46) zu dem Teilnehmer gehörende Teilnehmerdaten und/oder zu dem zugehörigen der Funktionsmodule (14a-14g) gehörende Funktionsmoduldaten anzeigt, wobei die Anzeige der Teilnehmerdaten und/oder der Funktionsmoduldaten von einer Interaktion der Interaktionseinheit des Teilnehmers und/oder die Interaktion der Interaktionseinheit des Teilnehmers von der Anzeige der Teilnehmerdaten und/oder Funktionsmoduldaten abhängig ist.

7. System zur Inbetriebnahme und/oder Wartung einer Brandmelder- und/oder Löschsteuerzentrale (12), wobei das System eine Brandmelder- und/oder Löschsteuerzentrale (12) und eine Anzeige- und Bedieneinheit (38, 40-44, 46) aufweist,
wobei die Brandmelder- und/oder Löschsteuerzentrale (12) eine zentrale Steuereinheit (30) und mehrere mit der zentralen Steuereinheit (30) verbundene Funktionsmodule (14a-14g) aufweist,
wobei die Anzeige- und Bedieneinheit (38, 40-44, 46) mit der zentralen Steuereinheit (30) verbunden oder verbindbar ist,
wobei jedes der Funktionsmodule (14a-14g) mehrere Anschlüsse zum Anschließen von Teilnehmern, insbesondere Brandmeldern, Signalgebern und/oder Aktoren, und eine Interaktionseinheit mit einer optischen Anzeigeeinheit (16a - 16g)) zur Signalisierung an einen Bediener aufweist,
wobei die Anzeige- und Bedieneinheit (38, 40-44, 46) dazu eingerichtet ist, zu einem der Funktionsmodule (14a-14g) gehörende Funktionsmoduldaten anzuzeigen, wobei die Signalisierung der Anzeigeeinheit des Funktionsmoduls (14a-14g) von der Anzeige der Funktionsmoduldaten abhängig ist,
wobei die Anzeige- und Bedieneinheit (38, 40-44, 46) ferner eingerichtet ist zum:
- Identifizieren eines der Funktionsmodule (14a-14g) basierend auf einer Eingabe in die Anzeige- und Bedieneinheit (38, 40-44, 46),
- Bereitstellen von zu dem identifizierten Funktionsmodul (14a-14g) gehörenden Funktionsmoduldaten,
- Anzeigen der Funktionsmoduldaten auf der Anzeige- und Bedieneinheit (38, 40-44, 46) und
- Ansteuern der optischen Anzeigeeinheit (16a-16g) des identifizierten Funktionsmoduls (14a-14g).

## Claims

1. A method for commissioning and/or maintaining a fire alarm and/or extinguishing control center (12) by means of a display and operating unit (38, 40-44, 46),
wherein the fire alarm and/or extinguishing control center (12) has a central control unit (30) and a plurality of functional modules (14a-14g) connected to the central control unit (30),
wherein the display and operating unit (38, 40-44, 46) is connected or can be connected to the central control unit (30),
wherein each of the functional modules (14a-14g) has a plurality of connections for connecting participants, in particular fire alarms, signal generators and/or actuators, and includes an interaction unit with an optical display unit (16a-16g) for signaling an operator, wherein the method is adapted in such a manner that the display and operating unit (38, 40-44, 46) displays functional module data belonging to one of the functional modules (14a-14g) and the display of the functional module data depends on the signaling of the optical display unit (16a-16g) of the functional module (14a-14g) wherein the method comprises
- identifying one of the functional modules (14a-14g) on the basis of an input to the display and operating unit (38, 40-44, 46),
- providing functional module data belonging to the identified functional module (14a-14g),
- displaying the functional module data on the display and operating unit (38, 40-44, 46), and
- controlling the optical display unit (16a-16g) of the identified functional module (14a-14g).

2. The method as claimed in claim 1, wherein the interaction unit comprises an actuating element (18a-18g), in particular a switch or a pushbutton, wherein the method comprises the following steps of:
- actuating the actuating element of one of the functional modules (14a-14g) by the operator,
- identifying the functional module (14a-14g) associated with the actuation,
- providing functional module data relating to the identified functional module (14a-14g), and
- displaying the functional module data on the display and operating unit (38, 40-44, 46).

3. The method as claimed in claim 2, wherein, upon actuation of the actuating element, the functional module transmits an identifier to the central control unit (30), wherein the central control unit (30) provides the functional module data on the basis of the identifier.

4. The method as claimed in claim 3, wherein the functional module (14a-14g) transmits the functional module data to the central control unit (30) at least partially in addition to the identifier and/or the central control unit (30) reads the functional module data from a memory on the basis of the identifier.

5. The method as claimed in one of the preceding claims, wherein the identification of one of the functional modules (14a-14g) has the following steps of:
- inputting a search term, in particular a group number, by means of the display and operating unit (38, 40-44, 46),
- transmitting the search term to the central control unit (30),
wherein the identification is carried out on the basis of the search term transmitted to the central control unit (30).

6. The method as claimed in one of the preceding claims,
wherein at least one participant which can be connected to at least one of the functional modules (14a-14g) additionally has an interaction unit for interacting with the operator,
wherein the method is adapted in such a manner that the display and operating unit (38, 40-44, 46) displays participant data belonging to the participant and/or functional module data belonging to the associated one of the functional modules (14a-14g), wherein the display of the participant data and/or the functional module data depends on an interaction of the interaction unit of the participant and/or the interaction of the interaction unit of the participant depends on the display of the participant data and/or functional module data.

7. A system for commissioning and/or maintaining a fire alarm and/or extinguishing control center (12), wherein the system has a fire alarm and/or extinguishing control center (12) and a display and operating unit (38, 40-44, 46),
wherein the fire alarm and/or extinguishing control center (12) has a central control unit (30) and a plurality of functional modules (14a-14g) connected to the central control unit (30),
wherein the display and operating unit (38, 40-44, 46) is connected or can be connected to the central control unit (30),
wherein each of the functional modules (14a-14g) has a plurality of connections for connecting participants, in particular fire alarms, signal generators and/or actuators, and includes an interaction unit with an optical display unit (16a-16g) for signaling an operator,
wherein the display and operating unit (38, 40-44, 46) is configured to display functional module data belonging to one of the functional modules (14a-14g),wherein the display of the functional module data depends on the signaling of the optical display unit (16a-16g) of the functional module (14a-14g) wherein the display and operating unit (38, 40-44, 46) is further configured for
- identifying one of the functional modules (14a-14g) on the basis of an input to the display and operating unit (38, 40-44, 46),
- providing functional module data belonging to the identified functional module (14a-14g),
- displaying the functional module data on the display and operating unit (38, 40-44, 46), and
- controlling the optical display unit (16a-16g) of the identified functional module (14a-14g).

## Revendications

1. Procédé de mise en service et/ou de maintenance d'une centrale d'alarme incendie et/ou de commande d'extinction d'incendie (12) au moyen d'une unité d'affichage et de commande (38, 40-44, 46),
dans lequel la centrale d'alarme incendie et/ou de commande d'extinction d'incendie (12) présente une unité de commande (30) centrale et plusieurs modules fonctionnels (14a-14g) reliés à l'unité de commande (30) centrale,
dans lequel l'unité d'affichage et de commande (38, 40-44, 46) est ou peut être reliée à l'unité de commande (30) centrale,
dans lequel chacun des modules fonctionnels (14a-14g) présente plusieurs raccords pour le raccordement de participants, en particulier alarmes incendie, émetteurs de signal et/ou actionneurs, et une unité d'interaction avec une unité d'affichage (16a-16g) optique pour la signalisation à un opérateur,
dans lequel le procédé est adapté de sorte que l'unité d'affichage et de commande (38, 40-44, 46) affiche des données de module fonctionnel appartenant à un des modules fonctionnels (14a-14g) et la signalisation de l'unité d'affichage du module fonctionnel (14a-14g) dépend de l'affichage des données de module fonctionnel, dans lequel le procédé comporte :
- l'identification d'un des modules fonctionnels (14a-14g) sur la base d'une entrée dans l'unité d'affichage et de commande (38, 40-44, 46),
- la fourniture de données de module fonctionnel appartenant au module fonctionnel (14a-14g) identifié,
- l'affichage des données de module fonctionnel sur l'unité d'affichage et de commande (38, 40-44, 46) et
- la commande de l'unité d'affichage (16a-16g) optique du module fonctionnel (14a-14g) identifié.

2. Procédé selon la revendication 1, dans lequel l'unité d'interaction comporte un élément d'actionnement (18a-18g), en particulier un commutateur ou un palpeur, dans lequel le procédé comporte les étapes suivantes :
- l'actionnement de l'élément d'actionnement d'un des modules fonctionnels (14a-14g) par l'opérateur,
- l'identification du module fonctionnel (14a-14g) afférent à l'actionnement,
- la fourniture de données de module fonctionnel du module fonctionnel (14a-14g) identifié et
- l'affichage des données de module fonctionnel sur l'unité d'affichage et de commande (38, 40-44, 46).

3. Procédé selon la revendication 2, dans lequel le module fonctionnel transmet, lors de l'actionnement de l'élément d'actionnement, un identifiant à l'unité de commande (30) centrale, dans lequel l'unité de commande (30) centrale fournit les données de module fonctionnel sur la base de l'identifiant.

4. Procédé selon la revendication 3, dans lequel le module fonctionnel (14a-14g) transmet les données de module fonctionnel au moins partiellement outre l'identifiant à l'unité de commande (30) centrale et/ou l'unité de commande (30) centrale lit les données de module fonctionnel sur la base de l'identifiant depuis une mémoire.

5. Procédé selon l'une quelconque des revendications précédentes, dans lequel l'identification d'un des modules fonctionnels (14a-14g) présente les étapes suivantes :
- l'entrée d'un terme de recherche, en particulier un numéro de groupe, au moyen de l'unité d'affichage et de commande (38, 40-44, 46),
- la transmission du terme de recherche à l'unité de commande (30) centrale,
dans lequel l'identification est effectuée sur la base du terme de recherche transmis à l'unité de commande (30) centrale.

6. Procédé selon l'une quelconque des revendications précédentes,
dans lequel au moins un participant qui peut être relié à au moins un des modules fonctionnels (14a-14g), présente en outre une unité d'interaction pour l'interaction avec l'opérateur,
dans lequel le procédé est adapté de sorte que l'unité d'affichage et de commande (38, 40-44, 46) affiche des données de participant appartenant au participant et/ou des données de module fonctionnel appartenant au module afférent des modules fonctionnels (14a-14g), dans lequel l'affichage des données de participant et/ou des données de module fonctionnel dépend d'une interaction de l'unité d'interaction du participant et/ou l'interaction de l'unité d'interaction du participant dépend de l'affichage des données de participant et/ou données de module fonctionnel.

7. Système de mise en service et/ou de maintenance d'une centrale d'alarme incendie et/ou de commande d'extinction d'incendie (12), dans lequel le système présente une centrale d'alarme incendie et/ou de commande d'extinction d'incendie (12) et une unité d'affichage et de commande (38, 40-44, 46),
dans lequel la centrale d'alarme incendie et/ou de commande d'extinction d'incendie (12) présente une unité de commande (30) centrale et plusieurs modules fonctionnels (14a-14g) reliés à l'unité de commande (30) centrale,
dans lequel l'unité d'affichage et de commande (38, 40-44, 46) est ou peut être reliée à l'unité de commande (30) centrale,
dans lequel chacun des modules fonctionnels (14a-14g) présente plusieurs raccords pour le raccordement de participants, en particulier alarmes incendie, émetteurs de signal et/ou actionneurs, et une unité d'interaction avec une unité d'affichage (16a-16g) optique pour la signalisation à un opérateur,
dans lequel l'unité d'affichage et de commande (38, 40-44, 46) est conçue afin d'afficher des données de module fonctionnel appartenant à un des modules fonctionnels (14a-14g), dans lequel la signalisation de l'unité d'affichage du module fonctionnel (14a-14g) dépend de l'affichage des données de module fonctionnel,
dans lequel l'unité d'affichage et de commande (38, 40-44, 46) est de plus conçue pour :
- l'identification d'un des modules fonctionnels (14a-14g) sur la base d'une entrée dans l'unité d'affichage et de commande (38, 40-44, 46),
- la fourniture de données de module fonctionnel appartenant au module fonctionnel (14a-14g) identifié,
- l'affichage des données de module fonctionnel sur l'unité d'affichage et de commande (38, 40-44, 46) et
- la commande de l'unité d'affichage (16a-16g) optique du module fonctionnel (14a-14g) identifié.
